Europäisches Patentamt

European Patent Office

Office européen des brevets

(11) Publication number: **0 225 404 B1**

# EUROPEAN PATENT SPECIFICATION

(45) Date of publication of patent specification: **10.04.91**  (51) Int. Cl.⁵: **C04B 20/00**, C04B 40/00

(21) Application number: **85308646.0**

(22) Date of filing: **28.11.85**

(54) Fibre-reinforced moulded cement body.

(43) Date of publication of application:
**16.06.87 Bulletin 87/25**

(45) Publication of the grant of the patent:
**10.04.91 Bulletin 91/15**

(84) Designated Contracting States:
**CH DE FR GB LI NL**

(56) References cited:
**DE-C- 934 395**
**GB-A- 1 537 663**
**US-A- 3 948 673**

**RESEARCH DISCLOSURE, vol. 168, no.16818, April 1978, page 7, Hants., GB; "Fibre bundles for concrete"**

(73) Proprietor: **MITSUI KENSETSU KABUSHIKI KAISHA**
**10-1, 3-Chome Iwamoto-cho**
**Chiyoda-ku Tokyo(JP)**

(72) Inventor: **Okamoto, Tadashi**
**No. 3-1-813, Kugenuma-Higashi Fujisawa-shi Kanagawa-ken(JP)**
Inventor: **Matsubara, Sumiyuki**
**No. 13, Nashimoto-cho Nijusseikigaoka Matsudo-shi Chiba-ken(JP)**
Inventor: **Handa, Masahisa**
**No. 1-29-2, Suwa Tama-shi Tokyo(JP)**

(74) Representative: **Bond, Bentley George et al Haseltine Lake & Co. 28 Southampton Buildings Chancery Lane London WC2A 1AT(GB)**

## Description

This invention relates to a method of manufacturing a fibre-reinforced moulded cement body for use as, for instance, a constructional material.

There is known a method for manufacturing a fibre-reinforced moulded cement body of this kind. In this known method short strands of fibres are added to and mixed into an unhardened cement material by stirring so that the fibres of the short strands are dispersed into the cement material, and then the unhardened cement material is hardened in a mould. For improving the uniform dispersion of the fibres of the short strands in the cement material, it has been proposed that a deflocculation agent such as polyethylene oxide be used (JP-A-80423/1978). However, as shown in Fig. 1 of the accompanying drawings, the known method is inconvenient in that the short strands A are liable to become entangled with each other via the fibres a thereof to form flocks on the surface of the unhardened cement material B before they are mixed, by stirring, into the unhardened cement material B . Consequently, the fibres a of the short strands A cannot be dispersed uniformly into the unhardened cement material B by stirring, even in the presence of the deflocculation agent, and thus there is obtained a fibre-reinforced moulded cement body which is not uniform in its mechanical strength.

US-A-3948673, GB-A-1537663 and Research Disclosure, vol. 168, no. 16818, page 7 (1978) disclose the production of fibre-reinforced cementitious material. According to US-A-3948673, fibres in the form of strands are treated with a sizing for better handling and dispersability. Due to the nature of the sizing, the strands undergo filamentization upon contact with the (aqueous) cement matrix. GB-A-1537663 discloses that strands of various fibres can be impregnated with a water-dispersable modifying binder, releasing the single fibres upon contact with the cement mortar. In addition, DE-C-934395 discloses a method of dispersing treated glass-fibres in a gypsum matrix. All of the binders and sizing agents disclosed in these four documents are water-soluble, so that they must be stored with care to prevent water vapour and moisture from being absorbed by them, since, if this were to happen, the binding effect would be reduced so that the fibres would become entangled with one another, i.e. "ball".

The present invention has for its purpose the provision of a method for manufacturing a fibre-reinforced moulded cement body which has fibres uniformly dispersed therein and which is uniform and excellent in its mechanical strength.

According to the present invention there is provided a method of manufacturing a fibre-reinforced moulded cement body, which comprises dispersing strands comprising a plurality of fibres into an unhardened cement material by stirring and thereafter hardening the cement material, characterised in that at least some of the strands are impregnated with, as a binder, an epoxy resin or a phenolic resin so that the fibres of the strands are weakly bonded to one another and so that, when the strands are dispersed in the unhardened cement material, the fibres are released from one another.

Regarding the cement material, there may be used any desired material, for example Portland cement, alumina cement, blast furnace cement, silica cement, flyash cement, regulated set cement, and mixtures thereof.

Regarding the fibres constituting the strands, there may be used one or more of inorganic fibres (such as carbon fibres, glass fibres, and ceramic fibres), organic fibres (such as fibres of aromatic polyamide, aromatic polyether amide, aromatic polysulphide amide, aromatic polysulphone amide, aromatic polyketone amide and aromatic polyamine amide) and metallic fibres (such as steel fibres).

As for the fibres, they are generally from 1 to 50 denier in thickness and from 5 to 30 mm in length. The strand, composed of the fibres, for example from several hundreds to several thousands in number, is impregnated with the binder so that the regularly arranged fibres thereof are set in position with the binder.

The force of binding of the fibres of the strand by the binder is so weak that the fibres of the strand are released from binding easily when the strands are mixed into the unhardened cement material by stirring in an Omnimixer or the like. In this case, the volume ratio of the strands to the binder is generally approximately 5:5 to 9:1.

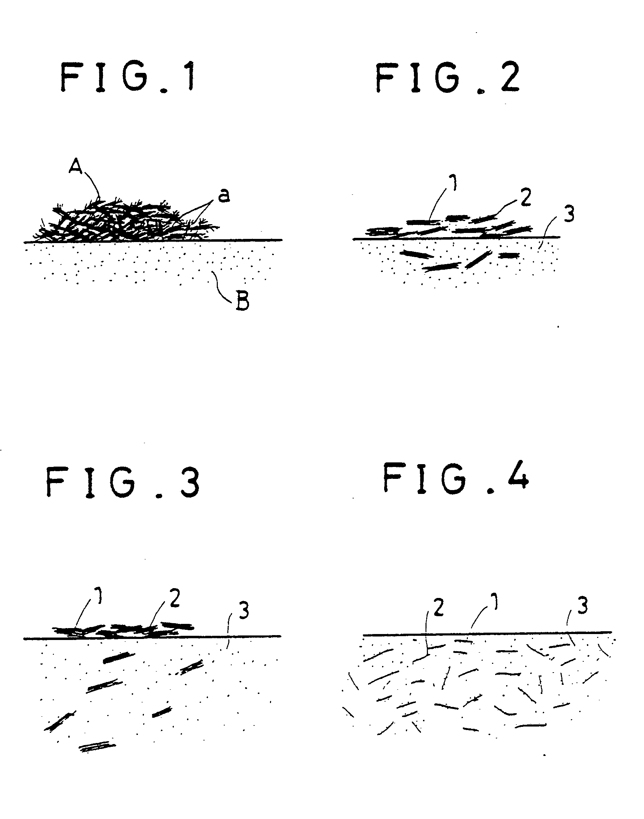

One example of a method of manufacturing a fibre reinforced moulded cement body according to the invention will now be described with reference to Figures 2 to 4 of the accompanying drawings.

As shown in Fig. 2, a large number of short strands 1, impregnated with a binder 2 in a predetermined ratio, are added to unhardened cement material 3 composed of, for example, Portland cement, sand and thickener. At that time, owing to the fact that the fibres of each short strand 1 are held in position by the binder 2, the fibres of the short strands 1 on the surface of the unhardened cement material are prevented from entangling with each other to form flocks.

When the unhardened cement material 3 is stirred by an Omnimixer, the short strands 1 are mixed and dispersed uniformly into the unhardened cement material 3, while the fibres thereof are gradually released from each other, as shown in Fig. 3. The stirring of the unhardened cement material 3 is continued, whereupon almost all of the fibres of the bundle of short strands 1 are released and dispersed uniformly into the unhardened cement material 3, as shown in Fig. 4. At this stage, the unhardened cement material 3 containing the fibres uniformly dispersed therein is hardened in a mould to form a fibre-reinforced moulded cement body.

A large number of the short strands 1 may be prepared by passing at least one long strand of a desired length through a liquid binder in a bath, and cutting the long strands into pieces of a desired short length. The short strands thus obtained are mixed with the unhardened cement material, usually in a ratio of from 0.5 to 10% by volume relative to the unhardened cement material.

The invention will now be illustrated by the following Example.

EXAMPLE

A strand of 2130 denier, composed of total aromatic polyamide fibre (such as that known under the trade name "Kevlar 49 type 968") was passed through a binder comprising a two-part aqueous epoxy emulsion (such as that sold under the trade name "G4018" by Kubo Ko Paint Co., Ltd.) and silica in a ratio of 8 : 2 by volume. Thereafter, the strand was squeezed by pinch rollers and was dried, so that the fibres of the strand are weakly bound by the binder. The ratio of the strand to the binder was 9 : 1 by volume. The strand was then cut to obtain a large number of short strands of 5 mm in length.

Next, an Omnimixer was started and, whilst the stirring operation of this mixture was being carried out, there was added sand (962 kg/m³), Portland cement (911 kg/m³) and thickener (14 kg/m³) in the order given, and finally a large number of the foregoing short strands in an amount of 1% by volume relative to the total amount of the unhardened cement material and also water. After the mixture had been stirred for three minutes, there was further added water (319 kg/m³) and stirring of the mixture was carried out for ten minutes.

Thereafter, the resulting mixture was poured into a mould and was moulded under pressure into a desired form, and was then cured for 48 hours at 40°C and at RH 50%, and then for 2 weeks at a room temperature, to obtain a fibre-reinforced moulded cement body. Upon breaking up the body, the fibres were found to be uniformly dispersed in the whole of the body.

Thus, according to the method of manufacturing a fibre-reinforced moulded cement body of this invention, the short strands are impregnated with an epoxy resin or a phenolic resin as a binder so that fibres or each strand may be weakly bound therewith, the fibres of the short strands do not come loose when the short strands are added to the unhardened cement material, but the fibres of the short strands are released from binding and are dispersed uniformly into the unhardened cement material by stirring of the unhardened cement material so that there can be produced a fibre-reinforced moulded cement body having a uniform mechanical strength by the subsequent hardening thereof.

## Claims

1. A method of manufacturing a fibre-reinforced moulded cement body, which comprises dispersing strands comprising a plurality of fibres into an unhardened cement material by stirring and thereafter hardening the cement material, characterised in that at least some of the strands are impregnated with, as a binder, an epoxy resin or a phenolic resin so that the fibres of the strands are weakly bonded to one another and so that, when the strands are dispersed in the unhardened cement material, the fibres are released from one another.

2. A method according to claim 1, wherein the ratio of the strands to the binder is from 5:5 to 9:1 by volume.

3. A method according to claim 1 or 2, wherein the strands are dispersed in the unhardened cement material in an amount of from 0.5 to 10% by volume relative to the unhardened cement material.

4. A method according to any of claims 1 to 3, wherein the fibres of the strands are from 1 to 50 denier in thickness and from 5 to 30 mm in length.

5. A method according to any of claims 1 to 4, wherein the fibres are carbon fibres, glass fibres, ceramic fibres, aromatic polyamide fibres, aromatic polyether amide fibres, aromatic polysulphide amide fibres, aromatic polysulphone amide fibres, aromatic polyketone amide fibres, aromatic polyamine amide fibres, or steel fibres.

## Revendications

1. Une méthode de fabrication de corps en ciment moulé renforcé de fibres qui comprend des brins composés d'un certain nombre de fibres se répartissant dans du ciment liquide par agitation, et ensuite durcissement du ciment, caractérisée en ce que, au moins certains brins sont imprégnés d'un liant qui est soit une résine époxy, soit une résine phénolique, de sorte que les fibres des brins soient faiblement liées les unes aux autres, et que, lorsque les brins sont répartis dans le ciment liquide, les fibres se détachent les unes des autres.

2. Une méthode suivant la revendication 1 dans laquelle le rapport brins/liant est de 5:5 à 9:1 en volume.

3. Une méthode suivant les revendications 1 ou 2 dans laquelle les brins sont répartis dans le ciment liquide dans une quantité de 0,5 à 10% en volume de ciment liquide.

4. Une méthode suivant l'une des revendications 1 à 3 dans laquelle les fibres des brins ont de 1 à 50 deniers d'épaisseur et de 5 à 30 mm de longueur.

5. Une méthode suivant l'une des revendications 1 à 4 dans laquelle les fibres sont des fibres de carbone, des fibres de verre, des fibres céramiques, des fibres polyamide aromatique , des fibres d'amide de polyether aromatique , des fibres de polysulfurs aromatique, des fibres d'amide de polysulphone aromatique, des fibres d'amide de polycétone aromatique, des fibres d'amide de polyamine aromatique, ou des fibres d'acier.

**Ansprüche**

1. Verfahren zur Herstellung von faserbewehrten gegossenen Zementkörpern, wobei aus einer Vielzahl von Fasern gebildete Stränge in das ungehärtete Zementmaterial eingerührt werden und danach die Härtung des Zementmaterials erfolgt,
   **dadurch gekennzeichnet,**
   daß wenigstens einige der Stränge mit einem Epoxyharz oder einem Phenolharz als Bindemittel derart imprägniert werden, daß die Fasern in den Strängen leicht aneinander gebunden werden und
   daß bei der Dispergierung der Stränge in dem ungehärteten Zementmaterial die Fasern von einander getrennt werden.

2. Verfahren gemäß Anspruch 1.
   wobei das Verhältnis der Stränge zu dem Bindemittel zwischen 5:5 bis 9:1, auf das Volumen bezogen, beträgt.

3. Verfahren gemäß Anspruch 1 oder 2,
   wobei die Stränge in dem ungehärteten Zementmaterial in einer Menge von 0,5 bis 10 Volumen-%, bezogen aus das ungehärtete Zementmaterial, dispergiert werden.

4. Verfahren gemäß einem jeden der Ansprüche 1 bis 3,
   wobei die Fasern in den Strängen eine Dichte von 1 bis 50 Denier und eine Länge von 5 bis 30 mm haben.

5. Verfahren gemäß einem jeden der Ansprüche 1 bis 4,
   wobei die Fasern Kohlefasern, Glasfasern, keramische Fasern, aromatische Polyamid-Fasern, aromatische Polyetheramid-Fasern, aromatische Polysulfidamid-Fasern, aromatische Polysulfonamid-Fasern, aromatische Polyketonamid-Fasern, aromatische Polyaminamid-Fasern oder Stahlfasern sind.

# FIG.1

# FIG.2

# FIG.3

# FIG.4